# EUROPEAN PATENT SPECIFICATION

(11) **EP 1 888 226 B1**
(45) Date of publication and mention of the grant of the patent: **14.09.2011**
(21) Application number: 06740296.6
(22) Date of filing: 30.03.2006
(51) Int. Cl.: B01J 20/20, C10G 29/04, C10G 25/00, C01B 31/08

(54) **PROCESS FOR REMOVING COLOR BODIES FROM HYDROCARBON-BASED FUELS USING ACTIVED CARBON**
VERFAHREN ZUR ENTFERNUNG VON FARBKÖRPERN AUS BRENNSTOFFEN AUF KOHLENWASSERSTOFFBASIS MIT AKTIVKOHLE
PROCEDE POUR ELIMINER DES COLORANTS DANS DES CARBURANTS A BASE D'HYDROCARBURES AU MOYEN D'UN CHARBON ACTIF

(30) Priority: 30.03.2005 US 93679
(43) Date of publication of application: 20.02.2008
(73) Proprietor: BP Corporation North America Inc., Warrenville, Illinois 60555 (US)
(72) Inventor: JOSEPH, Joseph, T., Naperville, Illinois 60565-4380 (US); WINWARD, Michael, R., Aurora, Illinois 60502 (US); ZHANG, Tiejun, Houston, Texas 77096 (US); MILLER, James, R., Roanoke, Virginia 24019 (US)
(74) Representative: Hamer, Christopher K.
(86) International application number: PCT/US2006/012127
(87) International publication number: WO 2006/105456

(56) References cited:
- EP-A- 1 514 917
- WO-A2-2004/045767
- DE-A1- 10 026 693
- US-A- 5 538 929

## Description

### Field of the Invention

This invention relates to a process useful in the decolorization and purification of hydrocarbon fuel. The invention relates to using an activated carbon having within its pore structure induced transition metal in the range of 0.1% to 5% for removing from liquid hydrocarbon fuels, especially gasoline, at least some of trace impurities selected from the group consisting of indanes, naphthalenes, phenanthrenes, pyrene, alkylbenzenes and mixtures thereof. The activated carbon may be derived from coal, petroleum or lignocellulose material. In addition, the invention relates to the method of preparing and treating activated carbon to facilitate its use for fuel purification.

### Background of the Invention

Activated carbon is a well-established adsorbent material for use as a clarifying media for removal of color bodies from a variety of sources.

US 4,695,386 teaches sequential acidulation, precipitation, and coagulation to result in a filtrate of the effluent from a pulp mill process stream, which filtrate is passed through a series of chambers for decolorization by contact with activated carbon.

US 4,728,435 teaches decolorization of aqueous glyoxal solution by passing the solution over a fixed bed of granulated activated carbon.

US 4,745,368 teaches that a long used method for removing impurities from sugar solutions employs particles of activated carbon. The sugar solution or syrup is forced through a bed of such particles maintained in a vessel such as a column.

US 5,429,747 teaches decolorization of waste water from cosmetic manufacturing processes. After adding a strong base to the waste water at high temperature to flocculate fatty substances, a colorless oxidizer is added to cause partial oxidation. The resulting waste water is then decolorized with powdered activated carbon.

There are two main technology platforms for the decolorization of fuel: (1) hydrotreating in the presence of metal catalyst supported on carbon and (2) adsorption.

(1) Catalytic Hydrotreating

US 4,755,280 discloses the process for improving the color and oxidation stability of the hydrocarbon streams containing multi-ring aromatic and hydroaromatic hydrocarbons by hydrotreating it in the presence of the hydrotreating catalyst containing iron and one or more alkali or alkaline-earth metals components.

US 5,403,470 discloses the decolorization of diesel fuel by hydrotreatment under mild conditions. The feedstock is first severely hydrotreated to convert organosulfur or organonitrogen. Then, the effluent is passed to a smaller downstream hydrotreating zone having much lower temperature but sufficient to lighten the color of a finished fuel.

US 5,449,452 discloses the hydrodearomatization process of the hydrocarbons by passing the charge feed into contact with bed of sulfided catalyst containing boron, a metal of non-noble Group VIII, and a metal of Group VIB on a carbon support at hydrotreating conditions.

US 5,435,907 discloses the hydrodearomatization process of the middle distillate hydrocarbons by passing the charge feed into contact with a bed of sulfide catalyst of the metal Group VIII and of Group VIB on the activated carbon support, in the presence of hydrogen at 570-850° F and 600-2500 psi and a hydrogen flow of 1000-5000 SCFB (Standard cubic feet per barrel of liquid feed). The activated carbon support has a BET surface area of at least about 900 m²/g, an average pore diameter between 16 to 50 angstrom, and a total pore volume (for nitrogen) of 0.4 to 1.2 cc/g.

US 5,472,595 discloses the hydrodearomatization process of the hydrocarbons by passing the charge feed into contact with bed of sulfided catalyst comprising 0.1 to 15% weight of nickel; and from 1 to 50% weight of tungsten and 0.01 to 10% weight of phosphorus, on an activated carbon support, in the presence of hydrogen gas at hydrotreating conditions of 200-450° C, a pressure of 200-3000 psig, a liquid hourly space velocity of 0.1-10 LHSV and a hydrogen feed rate of 200-10,000 SCFB. The activated carbon support has a surface area of 600 to 2000 m²/g, a pore volume for nitrogen of at least 0.3 cc/g, and an average pore diameter of 12 to 100 angstrom.

US 5,462,651 discloses the simultaneous hydrodearomatization, hydrodesulfurization and hydrodenitrogenation of the hydrocarbon oils by passing the charge hydrocarbon feed into contact with a bed of a sulfided metal catalyst which is being supported on the phosphorus-treated carbon, in the of hydrogen at the hydrotreating conditions. The metal sulfide catalysts comprising one or more metals of non-noble Group VIII, where at least one metal selected from tungsten and molybdenum.

US 5,676,822 discloses the process for hydrodearomatization of the hydrocarbon oil containing undesired aromatic components, sulfur and nitrogen compounds. The charge hydrocarbon feed is passed into contact of a bed of zinc-promoted metal sulfide catalyst that is supported on the activated carbon, in the presence of hydrogen gas at hydrotreating conditions.

The sulfide catalyst comprising 0.1 to 15% by weight of one or more non-noble Group VIII metals; and from 1 to 50% by weight of tungsten and/or from 1 to 20% by weight or molybdenum or chromium, and 0.01 to 10% by weight of zinc. The activated carbon support is characterized by a B.E.T. surface area of 600 to 2000 m²/g, a pore volume for nitrogen of at least 0.3 cc/g, and an average pore diameter of 12 to 100 Angstroms.

US 5,651,878 discloses a hydrodearomatization process of naphtha or a middle distillate hydrocarbon by hydrotreating it in the presence of a carbon-supported catalyst bearing (i) molybdenum or tungsten, (ii) a metal or non-noble Group VIII, and (iii) chromium. The carbon support has a B.E.T. surface area of at least 800 m²/g, a total pore volume for nitrogen of at least 0.4 cc/g, and average pore diameter by nitrogen adsorption, of between 16 and 50 Angstroms. This carbon support is preformed and the carbon supported catalyst is prepared by conventional impregnation methods using aqueous solutions of salts of the elements.

US 5,837,640 discloses the hydrodearomatization of naphtha or a middle distillate hydrocarbon using carbon-supported catalyst containing Groups VIII and VIB metals.

(2) Adsorption

US 3,920,540 discloses the process for decolorizing and increasing the viscosity index of the petroleum oil such as lubricating oil by passing the oil through alumina on a metallic steel wool support at 50-300°F.

US 5,207,894 discloses the process of removing aromatic color bodies, particularly oxygen or sulfur containing aromatics, from aromatic hydrocarbon stream by contacting the hydrocarbon stream with neutral attapulgite clay for a time sufficient to adsorb the aromatic color bodies. The process is most effective if the aromatic hydrocarbon stream is first dried using a molecular sieve.

Japanese Patent 10,204,446 discloses the decolorization of oil by treating with activated clay and/or silica-alumina.

US Patent Application 2004/0,256,320 discloses the process of separating color bodies and/or asphaltenic contaminants from a hydrocarbon mixture using membrane filtration. The membrane comprises (1) a top thin layer made of a dense membrane, and (2) a support layer made of a porous membrane. The top thin layer filters the color bodies and contaminants from the hydrocarbon mixture, while the porous support membrane provides mechanical strength to the membrane.

US Patent Application. 2004/0,129,608, discloses the process of decolorizing liquid hydrocarbon fuel such as gasoline fuels using decolorizing carbon. The process involves contacting the liquid fuel with activated carbon by passing the fuel through a carbon filter (possibly multiple carbon-filled columns) or by introducing particles of carbon into the liquid fuel and recovering said particles after treatment. Traces of impurities include indanes; naphthalenes, phenanthrenes, pyrene, alkyl benzene, and mixture thereof. The published patent application further teaches that any carbon source may be used to prepare the decolorizing carbon employed in the present invention. Carbons derived from wood, coconut, or coal are taught as preferred. The carbon may be activated, for example, by acid, alkali, or steam treatment. Suitable decolorizing carbons are described in Kirk-Othmer Encyclopedia of Chemical Technology, 3rd Edition, Vol 4, pages 562 to 569.

US Patent Application 2004/0,200,758 discloses a method for removing thiophene and thiophene compounds from liquid fuel that includes contacting the liquid fuel with an adsorbent which preferentially adsorbs the thiophene and thiophene compounds as well as a further method that includes selective removal of aromatic compounds from a mixture of aromatic and aliphatic compounds. The adsorbent comprises an ion-exchanged zeolite selected from the group consisting of zeolite X, zeolite Y; zeolite LSX, MCM-41 zeolites; silicoaluminophosphates, and mixtures thereof, the zeolite having exchangeable cationic sites, wherein at least one of the sites has the at least one of metal and metal cation present.

In view of the disclosures of the recited prior art teachings, one may expect prior art activated carbon materials, known for their decolorizing properties, to be capable of reducing the color of a hydrocarbon fuel such as gasoline. Lacking in the prior art, and not suggested by any known prior art teaching, is a process for removing color bodies from hydrocarbon-based fuel using an activated carbon material capable of hydrocarbon fuel decolorization beyond that taught or suggested by the prior art. Therefore, the object of the invention is the provision of a process for removing color bodies from hydrocarbon-based fuel using an activated carbon material which process provides unexpectedly improved hydrocarbon fuel decolorization.

### SUMMARY OF THE INVENTION

This invention provides improved processes for removing color bodies selected from the group consisting of indanes, naphthalenes, phenanthrenes, pyrene, alkybenzenes and mixtures thereof from hydrocarbon-based fuels using activated carbons described herein. The processes using the activated carbons can provide surprisingly improved removal of color bodies from such fuels.

This invention provides a process for removing color bodies selected from the group consisting of indanes, naphthalenes, phenanthrenes, pyrene, alkybenzenes and mixtures thereof from hydrocarbon-based fuel. Such process comprises contacting hydrocarbon-based fuel with a decolorizing carbon having within this pore structure a fuel decolorizing amount of reduced transition metal; and adsorbing at least a portion of the aforementioned color bodies within the hydrocarbon-based fuel onto the decolorizing carbon to produce a decolorized hydrocarbon-based fuel. Preferably, the decolorized hydrocarbon-based fuel has a Saybolt gain of at least 15 compared to the hydrocarbon-based fuel before decolorization. More preferably, the hydrocarbon-based fuel before decolorization has a Saybolt value less than or equal to -10 and the decolorized hydrocarbon-based fuel has a Saybolt value of a least 12.

In some embodiments, the decolorizing carbon includes carbon produced by steam, phosphoric acid, or zinc chloride activation. The fuel decolorizing amount of reduced transition metal is in the range from 0.1 % to 5%, more preferably from 1% to 3%. In some embodiments, the reduced transition metal comprises copper.

The activated carbon may be derived from lignocellulosic material or coal by steam or phosphoric acid activation. Examples of lignocellulosic materials include wood, coconut, nut shells, and fruit pits.

### DETAILED DESCRIPTION

A process for removing colour bodies from hydrocarbon-based fuel using anew activated carbon has been developed. Hydrocarbon-based fuel is contacted with such activated carbon and at least a portion of color bodies selected from the group consisting of indanes, naphthalenes, phenanthrenes, pyrene, alkybenzenes and mixtures thereof within the fuel is adsorbed onto the activated carbon.

The activated carbon is particularly effective for gasoline decolorizing and purification. Various technical approaches have been developed for increasing carbon gasoline decolorizing capacity via effectively enhancing the amount of polymerized phosphate which serves as the adsorption sites for gasoline color body molecules.

First, this new activated carbon may be produced by heat treatment in an inert or CO₂ atmosphere at from 538 to 1093°C (about 1000° to about 2000°F) (preferably from 649 to 982°C (about 1200° to about 1800°F)) of a conventional, phosphoric acid-activated carbon product (such as WV-B) commercially available from MeadWestvaco Corporation. The heat treatment converts residual phosphoric acid into a polymerized form that is effective for adsorption of gasoline color body molecules.

A second approach requires increasing phosphoric acid activation temperature from a range of about 427-593°C (800°-1100°F) up to a range of from 621-871°C (1150°-1600°F). However, an activation temperature above 704°C (1300°F) is preferred. A higher activation temperature promotes polymerization of phosphoric acid and thus increases the amount of polymerized phosphate in a phosphoric acid-activated carbon.

In a third approach, phosphoric acid is added to an activated carbon that already contains some residual phosphoric acid (such as wood-based WV-B and WV-A 1100 from MeadWestvaco Corporation) or does not contain any substantial amount of phosphoric acid (such as steam-activated coal-based CPG from Calgon Corporation or wood-based TAC-900 from MeadWestvaco Corporation). The added phosphoric acid is subsequently converted to a polymerized phosphate by a heat treatment as described in the first approach.

Finally, one or more transition metals can be added to an activated carbon that already contains some residual transition metals (such as steam-activated coal-based CPG from Calgon Corporation or wood-based TAC-900 from MeadWestvaco Corporation) or does not contain any substantial amount of transition metals (such as wood-based WV-B and WV-A 1100 from MeadWestvaco Corporation). In these last two approaches, there may some synergy achieved for improved hydrogen fuel purification/decolorization when phosphoric acid is added to an activated carbon with residual transition metals present or when a transition metal (usually in salt form) is added to an activated carbon with residual phosphoric acid.

### EXAMPLES

The following examples further describe embodiments of the invention and the activated carbon and its method of preparation. In these examples, a greater capacity of gasoline decolorizing is represented by a greater increase in Saybolt value after a given gasoline is treated with activated carbon at a constant dosage. The Saybolt value measures gasoline color from -30 (darkest) to +30 (brightest) (ASTM D156-00). While the higher the Saybolt value reflects the less color there is in the liquid, it is a relative term. Thus, the effectiveness of decolorization is relative to (and, obviously, affected by) its initial Saybolt value. Unless noted otherwise, all isotherm tests were conducted with a severe color gasoline at a carbon dosage of 0.3 wt% at ambient temperature. The solid/liquid contact time was one hour with stirring. The Saybolt value of gasoline was measured after the carbon particles were removed by filtration.

### Example 1

A summary of gasoline decolorizing isotherm results is provided in Table L The isotherm results were produced by solid/liquid contacts between samples of conventional wood-based, phosphoric acid-activated carbons, WV-B and WV-A 1100 (outside scope of claims), from MeadWestvaco Corporation, both prior to and after they were subjected to inert gas heat treatment, for example, at 873°C (1550°F) for 15 minuets. The untreated WV-B and WV-A 1100 samples removed a significant fraction of the gasoline color and improved the gasoline to a Saybolt value of 11-12, as compared to <-16 Saybolt value for the feed gasoline. On the other hand, the new heat-treated carbon products allowed the carbon treated gasoline to achieve a Saybolt value from 17 to as high as 19, which represents an increase of 5-7 points in Saybolt value over their base carbons. The improved decolorization is related to the polymerization, as a result of the heat treatment, of residual phosphoric acid that was present on these activated carbons.

**TABLE I* (outside scope of claims)**

| Saybolt Value of Gasoline Treated with Phosphoric Acid-Activated Carbons before and after Heat Treatment | | |
|---|---|---|
| (Untreated gasoline: < -16 Saybolt) | | |
| Activated Carbon | Before Heat treatment | After Heat Treatment |
| WV-B #1 | 11 | 18 |
| WV-B #2 | -- | 19 |
| WV-A 1100 | 12 | 17 |

### Example 2

The inert gas heat treatment as described in example 1 also improved the decolorizing capacity of coal- and coconut-based steam-activated carbons. As seen in Table II, the as-received Calgon CPG (steam-activated coal-based) and Pica G270 (steam-activated coconut-based) activated carbons treated the gasoline to a Saybolt value of 5 and 2, respectively. However, the inert gas heat treatment improved the gasoline decolorizing capacity of coal-based CPG by 8 points from 5 to 13 Saybolt value and of coconut-based G270 by 2 points from 2 to 4 Saybolt value. The improved decolorization as a result of the heat treatment is attributed to the auto-reduction of transition metals such as copper and iron that were present as impurities in these carbons.

**TABLE II***

| Saybolt Value of Gasoline Treated with Steam-Activated Carbons before and after Heat Treatment | | |
|---|---|---|
| (Untreated gasoline: < -16 Saybolt) | | |
| Activated Carbon | Before Heat treatment | After Heat Treatment |
| Calgon CPG | 5 | 13 |
| Pica G270 | 2 | 4 |

### Example 3

In examples 1 and 2 it was discovered that the gasoline decolorizing capacity of an activated carbon is substantially improved by inert gas heat treatment. The polymerized phosphate and reduced copper formed as a result of the heat treatment serve as the active sites for adsorption of gasoline color body molecules. Based on these findings, new carbon materials with improved gasoline decolorizing performance are prepared by incorporating polymerized phosphate or reduced copper into an activated carbon, as disclosed herein. The improved carbon performance enables carbon adsorption to become a more competitive alternative to catalytic hydrotreating technology, especially for purification of severe color gasoline.

Table III provides a summary of four activated carbons which do not perform well as-received but are greatly improved by incorporation of polymerized phosphate. Two points are noted. First, impregnation of phosphoric acid without subsequent high temperature nitrogen treatment does not significantly improve gasoline decolorizing capacity. An example is given for TAC-900 that is available from MeadWestvaco Corporation, with -3 Saybolt before and -2 Saybolt after the impregnation. This indicates the ineffectiveness of non-polymerized (usually water-soluble) phosphoric acid for gasoline decolorizing despite the increased carbon acidity. Second, converting the added phosphoric acid into a polymerized form by high temperature nitrogen treatment (e.g., 843°C (1550°F) for 15 minutes) greatly improves gasoline decolorizing capacity, regardless of the carbon nature. The gains range from 9 to 38 points in Saybolt value. Thus, MeadWestvaco's AquaGuard carbon showed the most drastic gain, with a 38-point increase in Saybolt value from -15 to 23. Adding additional polymerized phosphate to the well-performing invention carbon by the same approach improved the Saybolt value by only three points from 18 to 21.

**TABLE III* (not illustrating the invention)**

| Influence of Phosphoric Acid on Gasoline Decolorizing Capacity As measured by Saybolt value | | | | | | |
|---|---|---|---|---|---|---|
| Carbon Description | | | As-received carbon | After Impregnation with H3PO4 | | Saybolt Gain |
| Company | Grade | Source | | Dried (221°F) | N2-Treated (1550°F) | |
| Calgon | CPG | Coal | 5 | nm | 20 15 | |
| Pica | G270 | Coconut | 2 | nm | 11 | 9 |
| MWV | TAC-900 | Wood | -3 | -2 | 11 | 14 |
| MWV | AquaGuard | Wood | -15 | nm | 23 | 38 |
| MWV | Invention^{a} | Wood | 18 | nm | 21 | 3 |

| | | | | | | |
|---|---|---|---|---|---|---|
| nm - not measured (a) N2-treated WV-B, as described in example 1 | | | | | | |

Table IV provides a summary of activated carbons which are tested for the influence of impregnation with cupric acetate. A small gain was seen in gasoline decolorizing capacity with coconut carbon (improving from 2 to 3 Saybolt) and TAC-900 (improving from -3 to 0 Saybolt) after the carbons were impregnated with cupric acetate and subjected to 15 minutes of heat treatment at 843°C (1550°F), which reduced copper from Cu(II) into Cu(I) or Cu(O). A greater gain was seen with the invention carbon, with a 5-point increase from 18 to 23 Saybolt value. It is possible that a synergism exists between polymerized phosphate and reduced copper that are effective for adsorption of different color body molecules in gasoline. Copper in the reduced Cu(I) state in a Y-zeolite matrix was reported in US Patent Application 2004/0200758 to possess substantial capacity for denitrogenation of transportation fuel.

**TABLE IV***

| Influence of Copper on Gasoline Decolorizing Capacity As measured by Saybolt value | | | | | | |
|---|---|---|---|---|---|---|
| Carbon Description | | | As received carbon | After Impregnation with Cupric Acetate | | Saybolt Gain |
| Company | Grade | Source | | Dried (221°F) | N2-Treated (1660°F) | |
| Pica | G270 | Coconut | | nm | 3 | 1 |
| MWV | TAC-900 | Wood | -3 | -11 | 0 | 3 |
| MWV | Invention^{a} | Wood | 18 | 16 | 23 | 5 |

| | | | | | | |
|---|---|---|---|---|---|---|
| nm - not measured (a) N2-treated WV-B, as described in example 1 | | | | | | |

### Example 4

A MeadWestvaco WV-B carbon is subjected to 15 minutes of heat treatment in a nitrogen atmosphere at three different temperatures of 621, 843 and 954°C (1150°, 1550°, and 1750°F) As seen in Table V, the feed carbon contained 0.9% polymerized phosphate and yielded a Saybolt value of 11. Following a heat treatment at 621°C (1150°F), the polymerized phosphate content was increased from 0.9% to 2.7% and the Saybolt value was improved from 11 to 15. As the heat treatment temperature was further increased from 621 to 954°C (1150° to 1750°F), the content of polymerized phosphate continued to increase from 2.7% to 4.8% and the Saybolt value continued to improve from 15 to 20.

**TABLE V* (not illustrating the invention)**

| Influence of Heat Treatment Temperature on Polymerized Phosphate and Gasoline Decolorizing Capacity | | |
|---|---|---|
| Temperature °C (°F) | %PP** | Saybolt Value |
| Feed | 0.8 | 11 |
| 621 (1150) | 2.7 | 15 |
| 843 (1550) | 4.1 | 18 |
| 954 (1750) | 4.8 | 20 |

| | | |
|---|---|---|
| * The experimental protocol for Examples 1 to 4 and Tables I-V was as follows: | | |

Carbon heat treatment was carried out in a vertical quartz tube reactor which was externally heated electrically. In each run, exactly 5 or 10 grams of the dried carbon granules were heat treated with the carbon bed in full fluidization.

Granular activated carbon was impregnated with 10 wt% H3PO4 or 10% cupric acetate solutions, at a carbon to solution weight ratio of 3:10. After the excess liquid was drained, the wet carbon was dried in an air oven at 105°C (221°F) overnight. The dried carbon was then heat treated in a fluidized bed as described above.

Three grams of granular carbon were ground for 60 seconds in a Spex mill for the gasoline decolorizing isotherm tests. A constant carbon dosage of 0.3 wt% was used with a severe color gasoline (369-R-04). The contact time was kept constant at 60 minutes at ambient temperature. The Saybolt value of gasoline was measured after the carbon particles were removed from the gasoline by filtration. Specified in ASTM D-156/1500 for measuring the color of petroleum products including gasoline, Saybolt value ranges from -32 (darkest color) to 32 (least color). The higher the Saybolt value, the less color the gasoline has. The feed gasoline has a Saybolt value of <-16 (most likely about -24).

### Example 5 (outside scope of claims)

Wood-based, phosphoric acid-activated carbons having a range of residual phosphoric acid contents were subjected to 15 minutes of heat treatment in a nitrogen atmosphere at 843°C (1550°F). After the heat treatment, the carbon samples contained polymerized phosphate in the range of 3.7% to 11.8%, as compared to 3.1% for the N₂-heated WV-B as described in example 1. It is seen in Table VI that, as polymerized phosphate content increased from 3.1 % up to 10%, the Saybolt value of carbon-treated gasoline improved initially from 15 to 17 and then remained constant. However, as the polymerized phosphate content was further increased to above 10%, the Saybolt value of carbon-treated gasoline started to decline.

**TABLE VI**

| Influence of Polymerized Phosphate Content on Gasoline Decolorizing Capacity | | | |
|---|---|---|---|
| Carbon | %PP** | Saybolt Value | Saybolt Value*** |
| Sample 1 | 11.8 | | 9 |
| sample 2 | 10.2 | | 15 |
| Sample 3 | 9.9 | | 17 |
| Sample 4 | 6.8 | | 17 |
| Sample 5 | 5.0 | | 17 |
| Sample 6 | 3.7 | | 17 |
| | | | |
| Invention^{a} | 3.1 | 18 | 15 |

| | | | |
|---|---|---|---|
| (a) N2-treated WV-B, as described in example 1 ** The content of polymerized phosphate (%PP) is determined by the difference between the total phosphate and water-soluble phosphate. For total phosphate analysis, exactly 0.50 grams of dried Spex-milled powder was microwave-digested with sulfuric and nitric acids. For water-soluble phosphate analysis, exactly 0.50 grams of the same dried Spex-milled powder was boiled in nanopure water for 15 minutes. After solids were removed by filtration, aliquots of the filtrates were measured for phosphorous concentration by ICP. The phosphate content on an activated carbon is expressed as %H₃PO₄. The polymerized phosphate determined by this method is sometimes called water-insoluble phosphate or fixed phosphate. *** A higher carbon dosage of 0.5 wt% was used with a more severe color gasoline (550-R-04). The feed gasoline 1550-R-04 has a Saybolt value of - 24.8. | | | |

## Claims

1. A process of removing color bodies selected from the group consisting of indanes, naphthalenes, phenanthrenes, pyrene, alkybenzenes and mixtures thereof from hydrocarbon-based fuel comprising the steps of:
a. contacting hydrocarbon-based fuel with a decolorizing carbon having within its pore structure a fuel decolorizing amount of reduced transition metal in the range of from 0.1 % to 5%; and
b. adsorbing at least a portion of color bodies selected from the group consisting of indanes, naphthalenes, phenanthrenes, pyrene, alkybenzenes and mixtures thereof within the hydrocarbon-based fuel onto the decolorizing carbon to produce a decolorized hydrocarbon-based fuel.

2. The process of Claim 1 wherein the decolorized hydrocarbon-based fuel of step (b) has a Saybolt gain of at least 15 compared to the hydrocarbon-based fuel of step (a).

3. The process of Claim 2 wherein the hydrocarbon-based fuel of step (a) has a Saybolt value less than or equal to -10 and the decolorized hydrocarbon-based fuel of step (b) has a Saybolt value of a least 12.

4. The process of Claim 1 wherein the decolorizing carbon comprises carbon produced by steam, phosphoric acid, or zinc chloride activation.

5. The process of Claim 1 wherein the reduced transition metal comprises copper.

6. The process of Claim 1 wherein the fuel decolorizing amount of reduced transition metal is in the range from 1% to 3%.

7. The process of Claim 6 wherein the reduced transition metal comprises copper.

8. The process of Claim 1 wherein the decolorizing carbon comprises both polymerized phosphate and the reduced transition metal.

## Patentansprüche

1. Verfahren zum Entfernen von Farbkörpern ausgewählt aus der Gruppe bestehend aus Indanen, Naphthalinen, Phenanthrenen, Pyren, Alkylbenzolen und Mischungen davon aus Kraftstoff auf Kohlenwasserstoffbasis, umfassend die Schritte:
a. In-Kontakt-bringen von Kraftstoff auf Kohlenwasserstoffbasis mit einem enfärbenden Kohlenstoff, der in seiner Porenstruktur eine kraftstoffentfärbende Menge an reduziertem Übergangsmetall im Bereich von 0,1 % bis 5 % enthält; und
b. Adsorbieren wenigstens eines Teils der Farbkörper ausgewählt aus der Gruppe bestehend aus Indanen, Naphthalinen, Phenanthrenen, Pyren, Alkylbenzolen und Mischungen davon im Kraftstoff auf Kohlenwasserstoffbasis auf dem entfärbenden Kohlenstoff, um einen entfärbten Kraftstoff auf Kohlenwasserstoffbasis herzustellen.

2. Verfahren nach Anspruch 1, wobei der entfärbte Kraftstoff auf Kohlenwasserstoffbasis aus Schritt (b) verglichen mit dem Kraftstoff auf Kohlenwasserstoff aus Schritt (a) eine Saybolt-Zunahme von wenigstens 15 hat.

3. Verfahren nach Anspruch 2, wobei der Kraftstoff auf Kohlenwasserstoffbasis aus Schritt (a) einen Saybolt-Wert von weniger als oder gleich -10 hat, und der entfärbte Kraftstoff auf Kohlenwasserstoffbasis aus Schritt (b) einen Saybolt-Wert von wenigstens 12 hat.

4. Verfahren nach Anspruch 1, wobei der entfärbende Kohlenstoff einen Kohlenstoff umfasst, der durch Dampf-, Phosphorsäuren- oder Zinkchloridaktivierung hergestellt ist.

5. Verfahren nach Anspruch 1, wobei das reduzierte Übergangsmetall Kupfer umfasst.

6. Verfahren nach Anspruch 1, wobei die kraftstoffentfärbende Menge an reduziertem Übergangsmetall im Bereich von 1 % bis 3 % ist.

7. Verfahren nach Anspruch 6, wobei das reduzierte Übergangsmetall Kupfer umfasst.

8. Verfahren nach Anspruch 1, wobei der entfärbende Kohlenstoff sowohl polymerisiertes Phosphat als auch das reduzierte Übergangsmetall umfasst.

## Revendications

1. Procédé d'élimination de corps de couleur choisis dans le groupe constitué par les indanes, les naphtalènes, les phénanthrènes, le pyrène, les alkylbenzènes et les mélanges de ceux-ci, d'un combustible à base d'hydrocarbures comprenant les étapes de :
(a) mise en contact du combustible à base d'hydrocarbures avec du charbon décolorant comprenant dans sa structure de pores une quantité de décoloration d'un combustible d'un métal de transition réduit dans la plage de 0,1 % à 5 % ; et
(b) d'adsorption d'au moins une partie des corps de couleur choisis dans le groupe constitué par les indanes, les naphtalènes, les phénanthrènes, le pyrène, les alkylbenzènes et les mélanges de ceux-ci, dans le combustible à base d'hydrocarbures sur le charbon décolorant pour produire un combustible à base d'hydrocarbures décoloré.

2. Procédé selon la revendication 1, dans lequel le combustible à base d'hydrocarbure décoloré de l'étape (b) a un gain de Saybolt d'au moins 15 par rapport au combustible à base d'hydrocarbures de l'étape (a).

3. Procédé selon la revendication 2, dans lequel le combustible à base d'hydrocarbures de l'étape (a) a une valeur de Saybolt inférieure ou égale à -10 et le combustible à base d'hydrocarbures décoloré de l'étape (b) a une valeur de Saybolt d'au moins 12.

4. Procédé selon la revendication 1, dans lequel le charbon décolorant comprend du charbon produit par activation à la vapeur, à l'acide phosphorique ou au chlorure de zinc.

5. Procédé selon la revendication 1, dans lequel le métal de transition réduit comprend le cuivre.

6. Procédé selon la revendication 1, dans lequel la quantité de décoloration d'un combustible du métal de transition réduit est dans la plage de 1 % à 3 %.

7. Procédé selon la revendication 6, dans lequel le métal de transition réduit comprend le cuivre.

8. Procédé selon la revendication 1, dans lequel le charbon décolorant comprend à la fois du phosphate polymérisé et le métal de transition réduit.
